# EUROPÄISCHE PATENTSCHRIFT

(11) **EP 0 639 249 B1**
(45) Veröffentlichungstag und Bekanntmachung des Hinweises auf die Patenterteilung: **11.10.1995**
(21) Anmeldenummer: 93909345.6
(22) Anmeldetag: 03.05.1993
(51) Int. Cl.: F16H 57/02

(54) **GETRIEBEGEHÄUSE**
GEAR-CASING
CARTER DE BOITE DE VITESSES

(30) Priorität: 04.05.1992 AT 913/92
(43) Veröffentlichungstag der Anmeldung: 22.02.1995
(73) Patentinhaber: JÖRG, Helmut, A-1200 Wien (AT)
(72) Erfinder: JÖRG, Helmut, A-1200 Wien (AT)
(74) Vertreter: Casati, Wilhelm, Dipl.-Ing.
(86) Internationale Anmeldenummer: AT9300076
(87) Internationale Veröffentlichungsnummer: WO9322584

(56) Entgegenhaltungen:
- EP-A- 0 352 416
- DE-A- 3 821 632
- GB-A- 2 034 612
- US-A- 3 521 504
- US-A- 4 020 715

## Beschreibung

Die Erfindung bezieht sich auf ein entsprechend den im Oberbegriff von Anspruch 1 aufgeführten Merkmalen Getriebegehäuse, insbesondere für ein Winkel-, z.B. Schneckengetriebe, das mit insbesondere kreiszylindrischer Durchgangsöffnung in Längsrichtung eines das Gehäuse bildenden Strangpreßprofiles verläuft, das außen Nuten besitzt, die in ebene Außenflächen des Gehäuses münden, die unter einem, bevorzugt 90° betragenden, Winkel gegeneinander geneigt sind, wobei ausgehend von einer der ebenen Außenflächen eine Bohrung in das Gehäuse eingebracht ist, deren Umfangsfläche den Mantel der in Längsrichtung des Strangpreßprofiles verlaufenden Durchgangsöffnung anschneidet.

Bei einem Gehäuse dieser Art wurde es aus der DE-A 2 944 398 bekannt, an der Außenfläche des Gehäusekörpers drei längsgerichtete Aussparungen zur Aufnahme durchgehender, zwei Gehäusedeckel miteinander verbindender Schraubenbolzen vorzusehen. Die Wandungen der Aussparungen divergieren nach außen, so daß die Verbindungsschrauben quer zu ihrer Längsachse in die Aussparungen eingelegt werden können. Probleme treten bei einem derart ausgebildeten Gehäuse dann auf, wenn das Gehäuse an einer Maschine befestigt werden soll oder wenn die Verbindung mit einem Flanschmotor herzustellen ist.

Hier bringt die Erfindung eine Lösung in der Weise, daß die Nuten Hinterschneidungen aufweisen, die insbesondere T-Form, Trapez- bzw. Schwalbenschwanzform besitzen, wobei die in der Außenfläche gelegene Öffnung der Nut die geringste Weite des Nutenquerschnittes aufweist. Diese Ausgestaltung ermöglicht es, durch Schrauben, deren Köpfe in die hinterschnittenen Nuten eingesetzt sind, das Gehäuse an einer Maschine zu befestigen, wobei das Gehäuse mit der jeweiligen ebenen Außenfläche satt an einer an der Maschine vorgesehenen Gegenfläche anliegt. In analoger Weise kann auch ein Motor angeflanscht werden, der mit seinem Flansch satt auf der Außenfläche aufruht.

In weiterer Ausgestaltung des erfindungsgemäßen Gehäuses kann ein Winkelgetriebe, insbesondere Schneckengetriebe, mit dem vorstehend beschriebenen Gehäuse vorgesehen werden, wie es im Anspruch 2 angegeben ist.

Aus der bereits genannten DE-A 29 44 398 ist es bekannt, die Bohrung für die Aufnahme der Schnecke als Durchgangsbohrung auszubilden. Die Durchgangsbohrung wird dabei an beiden Enden durch Deckel verschlossen, welche die zur Lagerung der Schneckenwelle vorgesehenen Kugellager in der Bohrung positionieren. Die Außenringe der Kugellager liegen dabei an der Bohrungswand an und sind seitlich an dem jeweiligen Deckel abgestützt. Der Innenring jedes Kugellagers liegt dabei an einer Stirnfläche des Schneckenkörpers an. Es sind bei dieser Ausgestaltung zwei Dichtstellen für die Bohrung vorhanden. Darüberhinaus bedarf die Bohrung einer Bearbeitung, um die Kugellager an ihren Außenringen einwandfrei zu lagern.

Die der Erfindung zugrunde liegende Aufgabe, eine Vereinfachung zu schaffen, wird dadurch erreicht, daß bei dem Winkelgetriebe, insbesondere Schneckengetriebe, der vorgenannten Art, für die das Ritzel (Schnecke) aufweisende Welle eine Lagerung, insbesondere ein Wälzlager, in einem Gehäuse vorgesehen ist, das an das Strangpreßprofil angeflanscht ist, wobei der Flansch an jener Außenfläche anliegt, von der die Bohrung ausgeht. Das die Lagerung aufweisende Gehäuse ist das Gehäuse eines Flanschmotors, dessen Rotorwelle an ihrem freien Ende das Ritzel (die Schnecke) trägt oder wobei die Ritzelwelle das Lagergehäuse durchsetzt und im vom Strangpreßprofil gebildeten Gehäuse die zweite, insbesondere als Nadellager ausgebildet, Lagerstelle der Ritzelwelle anschließend an die als Sackbohrung ausgebildete Bohrung des Gehäuses angeordnet ist. Diese Ausgestaltung bringt den Vorteil, daß zumindest eine Lagerung des Ritzels bzw. der Schnecke in einem gesonderten Gehäuse angeordnet ist und damit unabhängig vom Getriebegehäuse bearbeitet werden kann, sodaß das Getriebegehäuse als solches, zumindest was die Lagerung der Schnecke betrifft, außer dem Einbringen der Bohrung, die als Sackbohrung ausgebildet ist, keiner weiteren Bearbeitung bedarf. Ist das Gehäuse für das Lager gleichzeitig das Gehäuse eines Flanschmotors, so befindet sich auch die zweite Lagerstelle in diesem Gehäuse und wird durch die Lagerung der Rotorwelle gebildet. Sofern jedoch die Ritzelwelle das Lagergehäuse durchsetzt und der außerhalb des Lagergehäuses befindliche Wellenstummel zu Antriebszwecken dient, wird die zweite Lagerstelle der Ritzelwelle fluchtend mit und anschließend an die Sackbohrung angeordnet. Als Lager kann hierbei ein Nadellager Anwendung finden.

Was nun die Lagerung der Großradwelle betrifft, so kann in besonderer Ausgestaltung der Erfindung hierfür zu beiden Seiten des Großrades je ein Lager angeordnet sein, das insbesondere als Wälzlager, z.B. Kugellager, ausgebildet ist, wobei jedes Lager in einer in die Durchgangsöffnung des Strangpreßprofiles eingesetzten Büchse angeordnet wird bzw. diese das Gleitlager bildet. Damit bedarf auch zwecks Unterbrindung der Großradlagerung das Gehäuse als solches keiner Bearbeitung. Zur Aufnahme der Lagerung dienen vielmehr gesonderte Büchsen, die in die Durchgangsöffnung des Strangpreßprofiles eingesetzt werden. Dies bringt den Vorteil, daß der Außendurchmesser der Büchsen auf den IST-Durchmesser der Durchgangsöffnung des Strangpreßprofils angepaßt werden kann, unabhängig von den durch die Abnutzung des Strangpreßwerkzeuges oder thermisch bedingten Veränderungen des Strangpreßwerkzeuges.

Von besonderem Vorteil ist es, wenn die Wälzlager auch zum Halten der Büchsen im Gehäuse herangezogen werden. Hiezu wird der Außenring des Wälzlagers an einer Schulter der Büchse und der Innenring des Wälzlagers an einem in eine Ringnut der Großradwelle eingesetzten Federring abgestützt. Die Büchse kann dabei auch einen Außenflansch besitzen, der an jener Fläche des Strangpreßprofiles anliegt, von der die Durchgangsöffnung ausgeht. Es sind dies die Stirnflächen des vom Strangpreßprofil gebildeten Gehäuses.

Zur Halterung der Buchsen können jedoch in besonderer Gestaltung des Erfindungsgegenstandes auch mehrere, insbesondere drei, Spannbolzen vorgesehen werden, deren jeder zwei miteinander fluchtend in den Buchsen angeordnete Axialbohrungen durchsetzt und durch die Buchsen gegeneinander verspannt sind.

Zur Abdichtung der die Spannbolzen aufnehmenden Bohrung ist es zweckmäßig, Scheiben aus elastisch verformbarem Material, insbesondere Kunststoff, vorzusehen, die zwischen Schraubenkopf bzw. Schraubenmutter und benachbarter Außenfläche der Büchse angeordnet sind. Beim Zusammenspannen der Büchsen durch Anziehen der Schraubenmuttern wird Material der Scheibe auch in das Gewinde verdrängt, womit auch das Gewinde abgedichtet wird.

Die Erfindung wird nachstehend anhand von in der Zeichnung dargestellten Ausführungsbeispielen näher erläutert. Es zeigen:
Fig. 1 in einem Querschnitt eine Ausführungsform eines Getriebegehäuses,
Fig. 2 ein der Fig. 1 entsprechendes Getriebegehäuse, jedoch für ein Getriebe, das unterschiedlich zu Fig. 1 nicht über einen Flanschmotor, sondern über andere Mittel, z.B. Zahnräder oder Riemenscheiben, antreibbar ist,
Fig. 3 einen Schnitt entlang der Linie III-III in Fig. 1,
Fig. 4 in einer Darstellung entsprechend Fig. 3 eine gegenüber Fig. 3 modifizierte Ausführungsform,
Fig. 5 in einer ebenfalls Fig. 3 entsprechenden Darstellung eine weitere modifizierte Ausführungsform,
Fig. 6 in einer Fig. 1 entsprechenden Darstellung ein als Kegelradgetriebe ausgebildetes Winkelgetriebe, und
Fig. 7 einen Schnitt entlang der Linie VII-VII in Fig. 6.

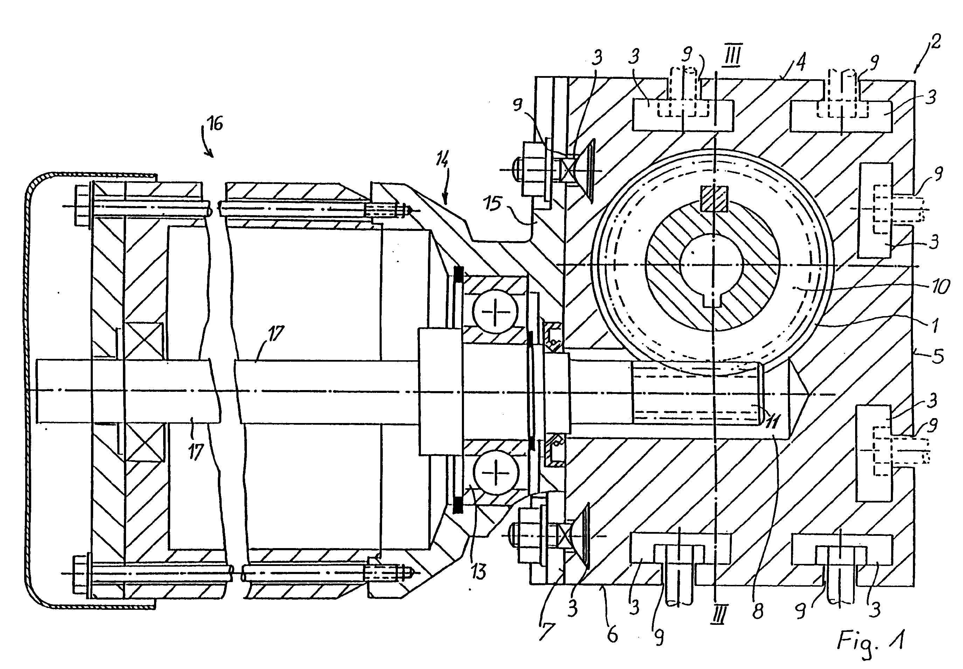

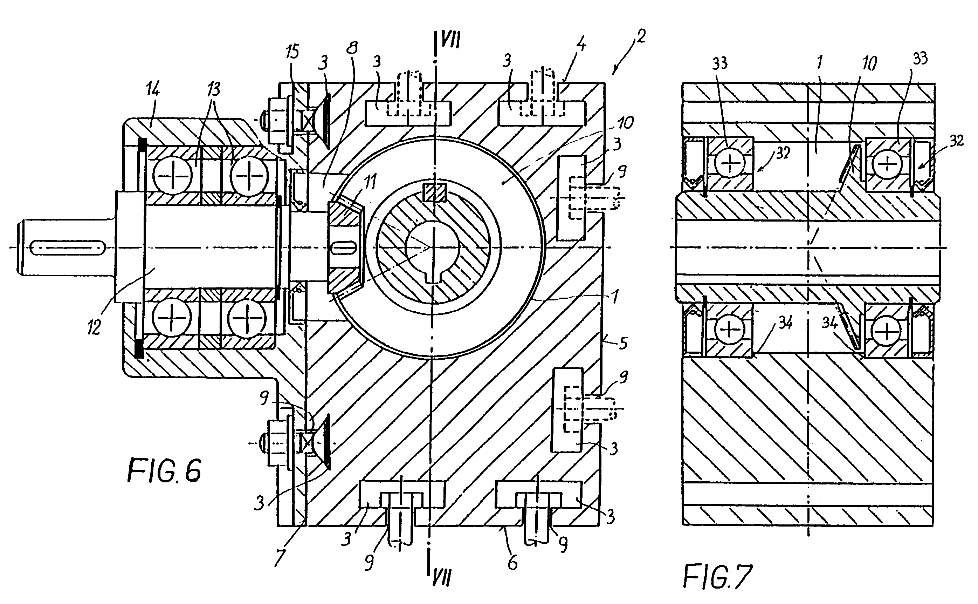

Das Getriebegehäuse ist als Ganzes in der Zeichnung mit 2 bezeichnet. Gemäß den Fig. 1 bis 5 dient es zur Aufnahme eines Schneckengetriebes. Es kann jedoch auch ganz allgemein für einen anderen Winkeltrieb, z.B. ein Kegelradgetriebe (Fig. 6 und 7) oder ein Planradgetriebe, Anwendung finden. Das Gehäuse ist als Strangpreßprofil ausgebildet und besitzt eine in Längsrichtung des Profiles verlaufende Durchgangsöffnung 1, die einen geschlossenen, insbes. kreiszylindrischen, Querschnitt aufweist. Das Gehäuse 2 ist außen mit Nuten 3 versehen, die in ebene Außenflächen 4, 5, 6, 7 des Gehäuses münden. Jede der Außenflächen schließt mit einer benachbarten Außenfläche einen Winkel ein, der im dargestellten Ausführungsbeispiel jeweils 90° beträgt. Das Gehäuse 2 bildet solcherart ein Prisma mit viereckiger, insbesondere rechteckiger, Grundfläche. Von der ebenen Außenfläche 7 des Gehäuses ist eine Bohrung 8 in das Gehäuse eingebracht. Im Speziellen ist diese Bohrung 8 als Sackbohrung ausgebildet. Die Umfangsfläche der Bohrung 8 schneidet den Mantel der in Längsrichtung des Strangpreßprofiles verlaufenden Durchgangsöffnung 1 an. Die Nuten 3 weisen Hinterschneidungen auf und besitzen in der dargestellten Ausführung T- bzw. Trapezform, können jedoch auch L-Form aufweisen, wobei jeweils die in der Außenfläche 4, 5, 6, 7 gelegene Öffnung 9 jeder Nut 3 die geringste Weite des Nutenquerschnittes aufweist. In die Nuten 3 können die Köpfe von Schrauben eingesetzt werden, mit welchen das Gehäuse 2 an einer Maschine od.dgl. befestigt werden kann.

Das Großrad 10 des Getriebes ist in der Durchgangsöffnung 1 und das Ritzel 11 (Schnecke oder Kegelradritzel) ist in der von einer der Außenflächen 7 des Strangpreßprofiles ausgehenden Bohrung 8 angeordnet. Für die das Ritzel 11 (Schnecke bzw. Kegelradritzel) aufweisende Welle 12 ist eine Lagerung in Gestalt eines Wälzlagers oder im Falle der Fig. 6 zweier Wälzlager 13 in einem Gehäuse 14 vorgesehen. Das Gehäuse 14 ist dabei an das Strangpreßprofil angeflanscht. Der Flansch 15 des Lagergehäuses 14 liegt dabei an jener Außenfläche 7 des Strangpreßprofiles an, von der die Bohrung 8 ausgeht.

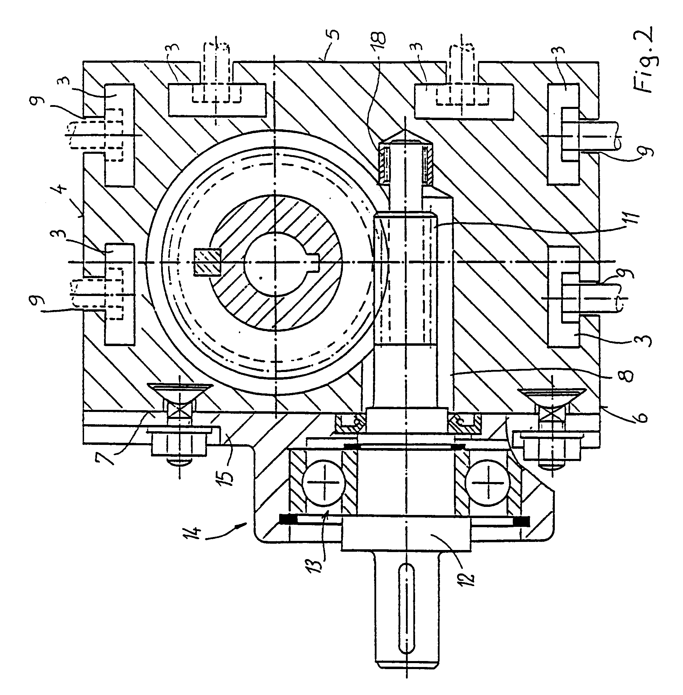

In der Ausführungsform nach Fig. 1 ist das die Lagerung aufweisende Gehäuse 14 das Gehäuse eines Flanschmotors 16. Die Rotorwelle 17 des Flanschmotors 16 trägt an ihrem freien Ende das Ritzel 11 (Schnecke). In der Ausführungsform nach den Fig. 2 und 6 durchsetzt die Ritzelwelle das Lagergehäuse 14, wobei an dem außerhalb des Lagergehäuses 14 befindlichen Wellenstummel das Antriebsmoment eingeleitet wird. Die zweite Lagerstelle der Ritzelwelle 12 befindet sich im Falle eines Schneckengetriebes (Fig. 2) im Gehäuse 2 und wird bevorzugt als Nadellager 18 ausgebildet. Das Nadellager sitzt dabei in einer Bohrung, die an die als Sackbohrung ausgebildete Bohrung 8 des Gehäuses anschließt. Gemäß der Ausführungsform nach Fig. 6 ist das Ritzel 11, das ein Kegelradritzel ist, fliegend auf der Welle 12 gelagert.

Hinsichtlich der Lagerung des Großrades 10 des Getriebes kann zu beiden Seiten des Großrades je ein Kugellager 19 vorgesehen werden. Für die Lagerung des Großrades 10 kann jedoch in nicht dargestellter Weise zu dessen beiden Seiten auch je ein Gleitlager dienen.

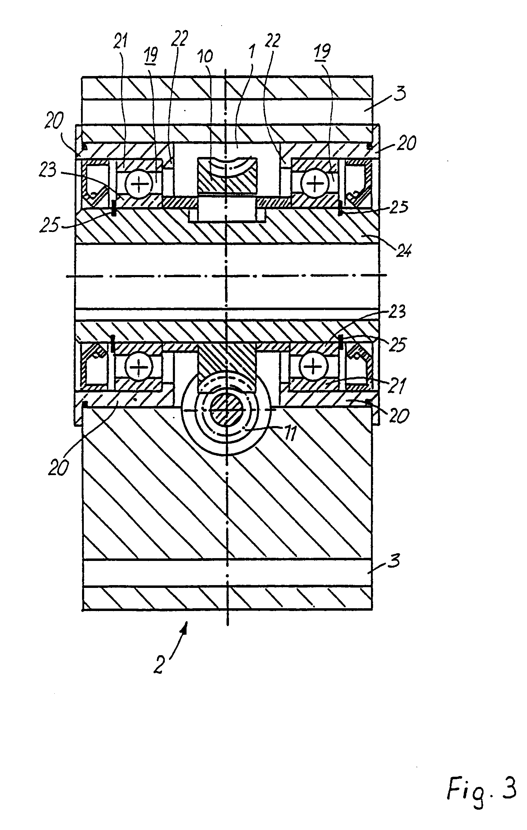

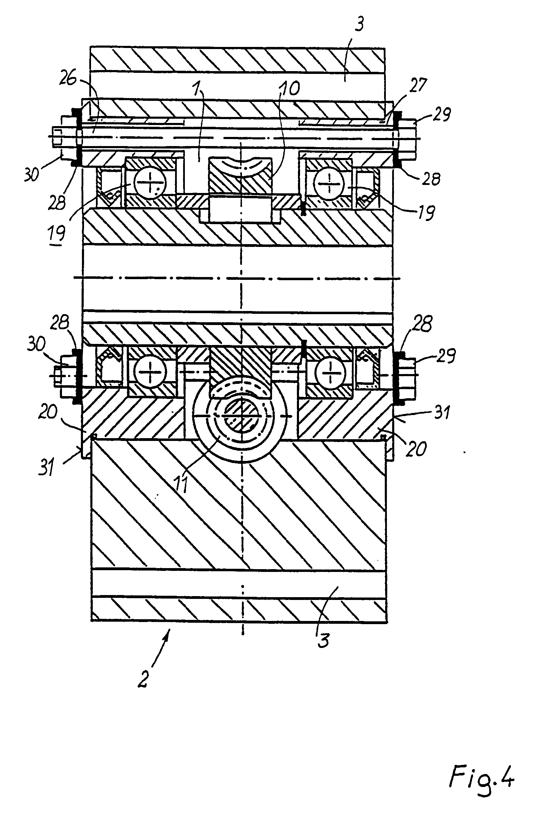

In der Ausführungsform nach den Fig. 3 und 4 ist jedes der Kugellager 19 für die Lagerung des Großrades 10 in einer in die Durchgangsöffnung 1 des Strangpreßprofiles eingesetzten Büchse 20 angeordnet.

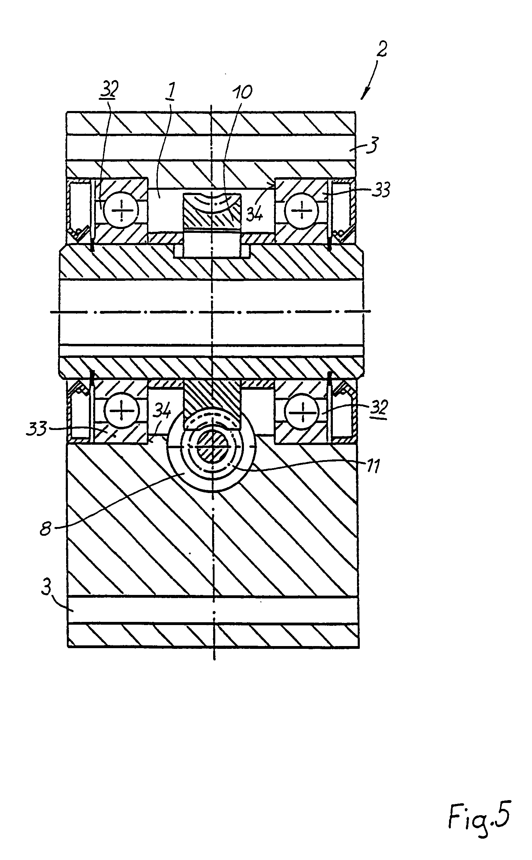

In der Ausführungsform nach den Fig. 5 und 6 sitzen Kugellager 32 ebenfalls zu beiden Seiten des Großrades 10, lagern jedoch mit ihrem Außenring 33 jeweils in einer Ausdrehung der Durchgangsöffnung 1 des Gehäuses 2 und stützen sich an einer am inneren Ende der Ausdrehung befindlichen Schulter 34 ab.

In der Ausführungsform nach Fig. 3 ist jede der Büchsen 20 über das darin angeordnete Wälzlager 19 in der Durchgangsöffnung 1 gehalten dadurch, daß der Außenring 21 des Wälzlagers an einer Schulter 22 der Buchse 20 und der Innenring 23 des Wälzlagers an einem in eine Ringnut der Großradwelle 24 eingesetzten Federring 25 anliegen.

In modifizierter Ausführung nach Fig. 4 können zur Halterung der Büchsen 20 auch mehrere - im dargestellten Ausführungsbeispiel sind es drei - Spannbolzen 26 vorgesehen werden. Jeder Spannbolzen 26 durchsetzt dabei zwei miteinander fluchtende, in den Büchsen 20 angeordnete Axialbohrungen. Die Spannbolzen 26 verspannen die beiden Buchsen 20 gegeneinander.

Zur Abdichtung der Axialbohrungen 27 nach außen sind Scheiben 28 aus elastisch verformbarem Material, insbesondere aus Kunststoff, vorgesehen. Diese Scheiben 28 sind jeweils zwischen Schraubenkopf 29 bzw. Schraubenmutter 30 und benachbarter Außenfläche 31 der Buchse 20 angeordnet. Beim Anziehen der Schraubenmuttern 30 werden die Scheiben 28 gepreßt, wobei Material der Scheiben in die Gewindegänge der Spannbolzen 26 bzw. der Schraubenmuttern 30 eindringt und das Gewinde abdichtet.

Der Rohling des Getriebegehäuses kann jeweils durch einfaches Ablängen des Strangpreßprofiles in der erforderlichen Länge des Gehäuses hergestellt werden. Außer der Einbringung einer Bohrung zur Aufnahme der Schnecken und gegebenenfalls deren Lagerung bzw. bei einem Kegelradgetriebe der Bohrung für das Kegelradritzel bedarf der Gehäuserohling keiner weiteren Bearbeitung.

## Patentansprüche

1. Getriebegehäuse (2), insbesondere für ein Winkelgetriebe beispielsweise ein Schneckengetriebe, mit einer insbesondere kreiszylindrischen Durchgangsöffnung (1), die in Längsrichtung des mit ebenen Außenflächen (4, 5, 6, 7) versehenen und durch ein Strangpreßprofil gebildeten Getriebegehäuses (2) verläuft, wobei die ebenen Außenflächen mit durch das Strangpressen hergestellten Nuten (3) versehen sind, welche in die ebenen Außenflächen münden, wobei die ebenen Außenflächen unter einem Winkel, der bevorzugt 90° beträgt, gegeneinander geneigt sind, wobei ausgehend von einer Außenfläche (7) der ebenen Außenflächen eine Bohrung (8) in das Getriebegehäuse (2) eingebracht ist, deren Umfangsfläche den Mantel der Durchgangsöffnung (1) anschneidet,
dadurch gekennzeichnet,
daß die Nuten Hinterschneidungen aufweisen, die insbesondere T-Form, Trapez-Form bzw. Schwalbenschwanz-Form besitzen, wobei die in den Außenflächen (4, 5, 6, 7) gelegenen Oeffnungen (9) der Nuten (3) die geringste Weite des Nutenquerschnittes aufweisen.

2. Winkelgetriebe, insbesondere Schneckengetriebe mit einer Schnecke, mit einem Getriebegehäuse (2) nach Anspruch 1, bei dem ein Großrad des Winkelgetriebes in der Durchgangsöffnung (1) und ein mit dem Großrad kämmendes Ritzel (11) in der von der ebenen Außenfläche (7) ausgehenden Bohrung (8) angeordnet sind,
dadurch gekennzeichnet,
- daß ein Lagergehäuse (14) mit einer Lagerung (13), insbesondere eine Wälzlagerung, vorgesehen ist, in der eine das Ritzel (11) tragende Welle (12 oder 17) gelagert ist, wobei das Lagergehäuse (14) an das Getriebegehäuse (2) über einen Flansch (15) angeflanscht ist, der an der Außenfläche (7) anliegt, von der die Bohrung (8) ausgeht,
und
- daß entweder die Welle eine Ritzelwelle (12) ist, die das Lagergehäuse (14) durchsetzt, wobei im Getriebegehäuse (2) im Anschluß an die als Sackbohrung ausgebildete Bohrung (8) eine weitere Lagerstelle (18), die insbesondere als Nadellager ausgebildet ist, für die Ritzelwelle (12) angeordnet ist,
oder
- daß die Welle eine Rotorwelle (17) eines Flanschmotors (16) ist, wobei das Lagergehäuse (14) ein Gehäuseteil des Flanschmotors (16) ist, dessen Rotorwelle (17) an ihrem freien Ende das Ritzel (11) trägt.

3. Winkelgetriebe, insbesondere Schneckengetriebe, nach Anspruch 2, bei dem zur Lagerung einer das Großrad tragenden Welle zu beiden Seiten des Großrades je ein Lager angeordnet ist, das insbesondere als Wälzlager, z.B. Kugellager, ausgebildet ist, dadurch gekennzeichnet, daß jedes Lager (19) in einer in die Durchgangsöffnung (1) des Strangpreßprofiles eingesetzten Buchse (20) angeordnet ist bzw. diese ein Gleitlager bildet.

4. Winkelgetriebe, insbesondere Schneckengetriebe, nach Anspruch 3, dadurch gekennzeichnet, daß jede der Buchsen (20) über das darin angeordnete Wälzlager (19) in der Durchgangsöffnung (1) gehalten ist, wobei der Außenring (21) des Wälzlagers (19) an einer Schulter (22) der Buchse (20) und der Innenring (23) des Wälzlagers (19) an einem in eine Ringnut der Großradwelle (24) eingesetzten Federring (25) anliegen.

5. Winkelgetriebe, insbesondere Schneckengetriebe, nach Anspruch 3, dadurch gekennzeichnet, daß die Buchsen (20) durch mehrere, insbesondere drei Spannbolzen (26), deren jeder zwei miteinander fluchtend in den Buchsen (20) angeordnete Axialbohrungen (27) durchsetzt, gegeneinander verspannt sind.

6. Winkelgetriebe, insbesondere Schneckengetriebe, nach Anspruch 5, dadurch gekennzeichnet, daß die die Spannbolzen (26) aufnehmenden Bohrungen (27) nach außen durch Scheiben (28) aus elastisch verformbarem Material, insbesondere Kunststoff, abgedichtet sind, die zwischen Schraubenkopf (29) bzw. Schraubenmutter (30) und benachbarter Außenfläche (31) der Buchse (20) angeordnet sind.

7. Winkelgetriebe, insbesondere Schneckengetriebe, nach Anspruch 2, dadurch gekennzeichnet, daß die Durchgangsöffnung (1) des Getriebegehäuses ausgehend von beiden Stirnflächen des Strangpreßprofiles bearbeitet ist, wobei zwischen den bearbeiteten Abschnitten ein unbearbeiteter Mittenabschnitt verbleibt, und wobei an der Übergangsstelle zwischen bearbeitetem und unbearbeitetem Abschnitt sich eine Schulter (34) befindet, die als Anlagefläche für ein zu beiden Seiten des Großrades (10) angeordnetes Lager (32) dient.

## Claims

1. Gear casing (2), particularly for a mitre gear, e.g. a worm gear, having a through-opening (1), particularly a circular cylindrical through-opening, which extends longitudinally of the gear casing (2) provided with smooth outer surfaces (4, 5, 6, 7) which is formed by an extruded section, the smooth outer surfaces being provided with grooves (3) produced by the extrusion process which open into the smooth outer surfaces, the smooth outer surfaces being inclined to one another at an angle, preferably 90°, whilst, starting from one outer surface (7) of the smooth outer surfaces, a bore (8) is formed in the gear casing (2), the circumferential surface of which bore (8) cuts into the lining of the through-bore (1), characterised in that the grooves have undercuts which are, in particular, T-shaped, trapezoidal or dovetailed in shape, the openings (9) of the grooves (3) located in the outer surfaces (4, 5, 6, 7) being the narrowest part of the groove cross section.

2. Mitre gear, particularly a worm gear having a worm, with a gear casing (2) according to claim 1, wherein a greater wheel of the mitre gear is mounted in the through-opening (1) and a pinion (11) meshing with the greater wheel is mounted in the bore (8) starting from the smooth outer surface (7), characterised in that a bearing housing (14) is provided with a bearing (13), especially a roller bearing, in which is mounted a shaft (12 or 17) carrying the pinion (11), the bearing housing (14) being flanged on to the gear casing (2) by means of a flange (15) which abuts on the outer surface (7) from which the bore (8) proceeds, and
either the shaft is a pinion shaft (12) which passes through the bearing housing (14), the gear casing (2) containing, adjacent to the bore (8) in the form of a blind bore, another bearing point (18) which is constructed in particular as a needle bearing, for the pinion shaft (12),
or the shaft is a rotor shaft (17) of a flange motor (16), the bearing housing (14) being a housing portion of the flange motor (16), the rotor shaft (17) of which carries the pinion (11) at its free end.

3. Mitre gear, particularly a worm gear, according to claim 2, wherein a bearing is provided on each side of the greater wheel in order to mount a shaft carrying the greater wheel, said bearing taking the form, in particular, of a roller bearing, e.g. a ball bearing, characterised in that each bearing (19) is arranged in a bushing (20) inserted in the through-opening (1) of the extruded section or this bushing (20) forms a sleeve bearing.

4. Mitre gear, particularly a worm gear, according to claim 3, characterised in that each of the bushings (20) is held in the through-opening (1) by means of the roller bearing (19) arranged therein, the outer ring (21) of the roller bearing (19) abutting on a shoulder (22) of the bushing (20) and an inner ring (23) of the roller bearing (19) abutting on a spring ring (25) inserted in an annular groove of the greater wheel shaft (24).

5. Mitre gear, particularly a worm gear, according to claim 3, characterised in that the bushings (20) are braced against each other by several, preferably three, clamping bolts (26), each of which passes through two axial bores (27) arranged in alignment with one another in the bushings (20).

6. Mitre gear, particularly a worm gear, according to claim 5, characterised in that the bores (27) receiving the clamping bolts (26) are outwardly sealed off by washers (28) of elastically deformable material, particularly plastics, which are arranged between the screw head (29) or nut (30) and the adjacent outer surface (31) of the bushing (20).

7. Mitre gear, particularly a worm gear, according to claim 2, characterised in that the through-opening (1) of the gear casing is machined starting from the two end faces of the extruded section, whilst between the machined portions there is an unmachined central part, and at the point of transition between the machined and unmachined portions there is a shoulder (34) which acts as an abutment surface for a bearing (32) arranged on both sides of the greater wheel (10).

## Revendications

1. Carter de protection d'engrenages (2), en particulier pour engrenage angulaire, par exemple un engrenage à vis sans fin, comprenant un ouverture de passage (1) en particulier cylindrique circulaire, qui s'étend dans la direction longitudinale du carter de protection d'engrenages muni de surfaces extérieures planes (4, 5, 6, 7) et formé par un profilé filé, les surfaces extérieures planes étant munies de rainures (3) formées par le filage, qui débouchent dans les surfaces extérieures, les surfaces extérieures étant inclinées entre elles d'un angle valant de préférence 90°, un perçage (8) étant réalisé dans le carter de protection d'engrenages (2) en partant de l'une (7) des surfaces extérieures planes, perçage dont la surface de circonférence coupe l'enveloppe de l'ouverture de passage (1),
caractérisée en ce que
les rainures présentent des contre-dépouilles qui possèdent en particulier une forme en T, une forme trapézoïdale ou une forme en queue d'aronde, les ouvertures (9) des rainures (13) situées dans les surfaces extérieures (4, 5, 6, 7) présentant la plus faible largeur de la section transversale de la rainure.

2. Engrenage angulaire, en particulier engrenage à vis sans fin comprenant une vis sans fin, comprenant un carter de protection d'engrenages (2) selon la revendication 1, dans lequel une grande roue de l'engrenage angulaire est placée dans l'ouverture de passage (1) et un pignon (11) s'engrenant avec la grande roue étant placé dans le perçage (8) partant de la surface extérieure plane (7),
caractérisé en ce qu'
un logement de palier (14) est prévu avec un palier (13), en particulier un palier à roulement, dans lequel est monté un arbre (12 ou 17) portant le pignon (11), le logement de palier (14) étant monté sur le carter de protection d'engrenages (2) par l'intermédiaire d'une bride (15), qui repose sur la surface extérieure de laquelle part le perçage (8), et
en ce que, soit l'arbre est un arbre de pignon (12) qui traverse le logement de palier (14), un autre point d'appui (18), conformé en particulier en palier à aiguilles, étant alors prévu dans le carter de protection d'engrenages (2) pour l'arbre de pignon (12), à la suite du perçage (8) conformé en perçage borgne,
soit l'arbre est un arbre de rotor (17) d'un moteur à bride (16), le logement de palier (14) étant une partie du carter du moteur à bride (16) dont l'arbre de rotor (17) porte le pignon (11) à son extrémité libre.

3. Engrenage angulaire, en particulier engrenage à vis sans fin, selon la revendication 2, dans lequel, pour supporter un arbre portant la grande roue, des deux cotés de la grande roue, il est placé à chaque fois un palier, qui est conformé en particulier en palier de roulement, par exemple roulement à billes, caractérisé en ce que chaque palier (19) est placé dans une douille (20) engagée dans l'ouverture de passage (1) du profilé filé, ou celle-ci forme un palier lisse.

4. Engrenage angulaire, en particulier engrenage à vis sans fin, selon la revendication 3, caractérisé en ce que chacune des douilles (20) est maintenue dans l'ouverture de passage (1) par le palier à roulement (19) qui s'y trouve, la bague extérieure (21) du palier à roulement (19) s'appuyant contre un épaulement (22) de la douille (20) et la bague intérieure (23) du palier à roulement (19) s'appuyant contre une rondelle-ressort (25) insérée dans une rainure annulaire de l'arbre (24) de la grande roue.

5. Engrenage angulaire, en particulier engrenage à vis sans fin, selon la revendication 3, caractérisé en ce que les douilles (20) sont contraintes l'une contre l'autre par plusieurs, en particulier trois, boulons de tension (26), qui traversent deux par deux en alignement mutuel des perçages axiaux (27) ménagés dans les douilles (20).

6. Engrenage angulaire, en particulier engrenage à vis sans fin, selon la revendication 5, caractérisé en ce que les perçages (27) recevant les boulons de tension (26) sont fermés vers l'extérieur par des rondelles (28) en matériau déformable élastiquement, en particulier en matière synthétique, qui sont placées entre la tête de vis (29) ou l'écrou (30) et la surface extérieure (31) voisine de la douille (20).

7. Engrenage angulaire, en particulier engrenage à vis sans fin, selon la revendication 2, caractérisé en ce que l'ouverture de passage (1) du carter de protection d'engrenages est usinée en partant des deux surfaces frontales du profilé filé, une section médiane non usinée restant encore entre les deux sections usinées, et la zone de transition entre sections usinées et non-usinée comprenant un épaulement (34) qui sert de surface d'appui pour un palier (32) placé des deux côtés de la grande roue (10).
